(19) Europäisches Patentamt
European Patent Office
Office européen des brevets

(11) **EP 3 401 005 A1**

(12) **EUROPEAN PATENT APPLICATION**

(43) Date of publication:
**14.11.2018 Bulletin 2018/46**

(51) Int Cl.:
*B01J 2/04* (2006.01)   *B01J 2/18* (2006.01)
*B07B 13/10* (2006.01)

(21) Application number: **17169880.6**

(22) Date of filing: **08.05.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Koninklijke Philips N.V.
5656 AE Eindhoven (NL)**

(72) Inventors:
• **KONG, Tao
5656 AE Eindhoven (NL)**
• **SUN, Ming
5656 AE Eindhoven (NL)**
• **BOUMA, Peter Hermanus
5656 AE Eindhoven (NL)**

(74) Representative: **de Haan, Poul Erik et al
Philips International B.V.
Philips Intellectual Property & Standards
High Tech Campus 5
5656 AE Eindhoven (NL)**

(54) **SYSTEMS AND METHOD FOR GENERATING DRY PARTICLES FROM A LIQUID SOLUTION**

(57)    The invention provides a device for generating dry particles of a predetermined size from a liquid solution which includes a droplet generator, a drying unit and a particle size selector. The particle size selector comprises a deflection channel and a moveable nozzle, wherein the movable nozzle can be moved along the deflection channel to collect particles of a desired size.

FIG. 1

**Description**

FIELD OF THE INVENTION

This invention relates to the generation of dry particles from a liquid solution, and more specifically the generation of dry salt particles of a desired size from a saline solution.

BACKGROUND OF THE INVENTION

In recent years there has been a considerable increase in the number of allergic diseases, reactions and other serious complications due to drug therapies. As a result, clinicians are encouraging the development of drug-free treatment methods. Halotherapy is one such method, which is a mode of treatment which simulates a natural salt cave microclimate in a controlled environment. Artificial salt (NaCl) aerosol sources, such as halochambers, saline devices or inhalers, have become a convenient and inexpensive alternative to natural ones. Both natural and artificial saline aerosols used in therapy lead to an improved quality of life.

Salt aerosols improve the quality of the atmospheric air in a multitude of ways, including antiviral prophylaxis and improving the functional parameters of cardiovascular and psychoneuromotor systems in humans involved in intense physical activities.

Halotherapy also possesses many health benefits including: improvement of the cardiorespiratory and psychoneuromotory functions; strengthening of the immune system, amelioration of asthma; and the removal of sputum from the respiratory tract. Some clinical trials have resulted in an improvement of the clinical state in: 75% of severe asthma cases; 85% of mild and moderate asthma cases; and 97% of chronic bronchitis, bronchiectasis and cystic fibrosis cases (A.V. Chervinskaya, Journal of Aerosol Medicine, 1995, 8, 3).

Currently, salt rooms (halochambers) are typically used to create a simulated salt cave microclimate; however, this type of treatment is not suitable for consumers in a home environment. In this case, salt aerosol generators are available.

Most salt aerosol generators deliver liquid droplet to consumers, which are not as effective as dry salt particles. Currently, inhalable dry NaCl particles (diameter, $D \leq 5 \ \mu m$) make use of preparation and delivery by dry powder inhalers (DPIs). The dry powder preparation process is complicated and the encapsulation for each dose is expensive. The restricted delivery method and high price limits the possible applications of saline therapy, potentially preventing the access of some users such as: asthma sufferers at home; patients in hospital; students in sports classes; and athletes in training halls. This is also the case with dry powder inhalers in general, which carry the additional drawback of a sharp inhalation being required of the user to properly administer the dose.

In situ generation of inhalable ($D \leq 5 \ \mu m$) and aerodynamically stable ($D \leq 2.5 \ \mu m$) dry NaCl aerosols is challenging due to physical stability issues, such as the hygroscopic properties of the salt particles. By considering the penetration depth and deposition efficiency of dry NaCl particles in human lungs, the optimal diameter of the dry salt particles should be below $2 \mu m$. Generally, only particles with a diameter less than $1 \mu m$ can reach deep into the alveolar region; whereas, most of the inhaled dry NaCl particles ($D < 2 \mu m$) will be deposited on the respiratory tract.

Consumers with different respiratory ailments may require different sizes and amounts of salt particles. For example, for problems in the upper airway, salt particles several microns in diameter are able to reach the affected sites; however, for issues in the lower airway, only salt particles of smaller sizes can migrate to the affected sites. Additionally, some sites require nanometre scale particles. Currently available solutions don't possess a mechanism to select the size of the particles delivered to the user based on their condition.

SUMMARY OF THE INVENTION

The invention is defined by the claims.

According to examples in accordance with an aspect of the invention, there is provided a device for generating dry particles of a predetermined size from a liquid solution, wherein the device comprises:

a droplet generator, wherein the droplet generator is adapted to generate droplets from the liquid solution;
a drying unit, wherein the drying unit is adapted to generate dry particles from the droplets; and
a particle size selector, wherein the particle size selector comprises:

a deflection channel, wherein the dry particles are deflected within the deflection channel in dependence on their size; and
a movable nozzle along the deflection channel, wherein the movable nozzle is adapted to collect dry particles of a predetermined size.

This device generates dry particles of a predetermined size from a liquid solution. The droplet generator nebulizes the liquid solution, thereby causing droplets to form in the air within the device. The droplets are then provided to the drying unit, which causes the liquid to evaporate from the droplets, thereby generating the dry particles, which are then provided to a particle size selector. Within the particle size selector, the particles move a certain distance along a deflection channel based on their size. A movable nozzle is moved along the deflection channel to the travel distance of the desired particle size, where the particles are then collected.

The nozzle may be moved to collect particles of differing sizes depending on the situation. In this way, it is possible to perform in situ generation and delivery of dry particles, of a predetermined size, from a liquid solution.

In an embodiment the liquid solution comprises a saline solution.

Thus, the device is able to generate salt particles of varying sizes for use in saline therapy. Larger salt particles may be used to treat conditions in the upper airway of a user and smaller particles are used to treat conditions located in the lower airways.

In some embodiments, the droplet generator comprises at least one of an ultrasonic transducer and a compressed air unit.

The droplets may be generated by way of an ultrasonic transducer or by compressed air. These methods will produce droplets of varying sizes; however, only droplets with a diameter less than $5\mu m$ will remain suspended in the air long enough to be provided to the drying unit.

In an arrangement, the drying unit comprises a temperature control unit.

In this way, the temperature within the drying unit can be increased, encouraging the evaporation of the droplets and the formation of dry particles. In addition, by controlling the temperature of the air within the drying unit, it is possible to reduce the relative humidity within the device, thereby further encouraging the evaporation of the water molecules within the droplets.

In some designs, the temperature control unit comprises at least one of: a Peltier device; an electrical resistance heater; an infrared radiation source; and a microwave radiation source.

Thus, the temperature control unit may employ a single device, or combination of devices, in order to control the temperature within the drying unit.

In an embodiment, the drying unit comprises an absorption material adapted to reduce the relative and absolute humidity within the drying unit.

By further reducing the humidity within the drying unit, the evaporation of the droplets is encouraged. In this way, the time needed to produce dry particles from the solution may be reduced, thereby allowing the size of the drying unit, and so the device, to be reduced.

In some arrangements, the movable nozzle collects dry particles with a diameter of less than $2\mu m$ and preferably with a diameter of less than $1\mu m$.

In this way, particles may be selected at an appropriate size for use in deep lung therapies.

In an embodiment, the moveable nozzle comprises a rotatable outlet.

Thus, the direction of flow of the dry particles exiting the device may be selected. For example, in a breathing apparatus the dry particles should be directed towards the user's nose or mouth.

In some embodiments, the drying unit further comprises a charging unit adapted to charge the dry particles and in further embodiments, the deflection channel comprises an electromagnetic field generator.

In this way, the drying unit may impart a charge to the dry particles in order to allow the device to further control their movement. By generating an electromagnetic field, a Lorentz force is applied to the charged particles as they move through the deflection channel. The magnetic component of the field will alter the direction of travel of the particles, whereas the electric component of the field will alter the overall distance travelled by the particles.

In an arrangement, the device further comprises an air flow generator.

By providing an air flow, the dry particles can be made to leave the device with a desired velocity. This may be used, for example, to spread the particles throughout an indoor environment. In addition, this may reduce the need for the user to perform a sharp inhalation in order to receive an appropriate dose of the dry particles.

In an embodiment, the device further comprises a storage unit adapted to store the liquid solution.

In some embodiments, the device further comprises a recycling unit, wherein the recycling unit is adapted to move uncollected particles from the particle size selector to the storage unit.

The recycling unit prevents the build-up of unused particles within the device and allows the particles to be reused rather than being disposed of.

According to examples in accordance with an aspect of the invention, there is provided a system for generating dry particles of a predetermined size from a liquid solution, wherein the system comprises:

a sensor, wherein the sensor is adapted to generate environmental data; a device as defined above; and
a control unit in communication with the device and the sensor, wherein the control unit is adapted to control the device based on the environmental data.

By providing a controller and a sensor, the device may be controlled using the environmental data from the sensor. For example, if the sensor detects a user coughing within the device's environment, such as within the same room, the controller may control the device to generate dry particles and select those with an optimal size to treat a cough. The controller may also receive an input from a user in order to control the device.

According to examples in accordance with an aspect of the invention, there is provided a method for generating dry particles of a predetermined size from a liquid solution, the method comprising:

generating droplets from the liquid solution;
generating dry particles from the droplets;
deflecting the dry particles along a deflection channel based on their size; and moving a nozzle to a position along the deflection channel so as to collect dry particles of a predetermined size.

BRIEF DESCRIPTION OF THE DRAWINGS

Examples of the invention will now be described in detail with reference to the accompanying drawings, in which:

Figure 1 shows a schematic view of a device for generating dry particles from a liquid solution;
Figure 2 shows two graphs of particle concentration against time;
Figure 3 shows an embodiment of the drying unit shown in Figure 1;
Figure 4 shows an embodiment of the particle size selector shown in Figure 1;
Figure 5 shows an example of determining the travel distance of a particle;
Figure 6 shows a further example of determining the travel distance of a particle;
Figure 7 shows a motion of a particle; and
Figure 8 shows a method of the invention.

DETAILED DESCRIPTION OF THE EMBODIMENTS

The invention provides a device for generating dry particles from a liquid solution which includes a droplet generator, a drying unit and a particle size selector. The particle size selector comprises a deflection channel and a moveable nozzle, wherein the movable nozzle can be moved along the deflection channel to collect particles of a desired size.

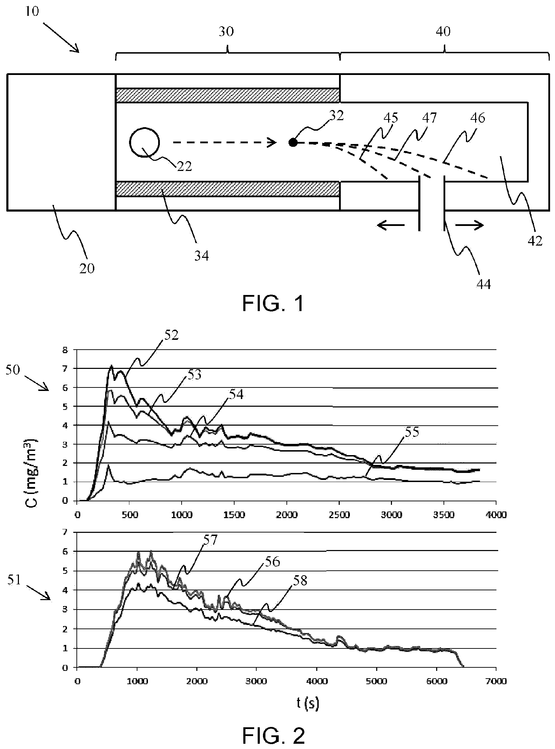

Figure 1 shows a device 10 comprising a droplet generator 20, wherein the droplet generator is adapted to generate droplets 22 from a liquid solution, such as a saline solution. The droplet generator may employ an ultrasonic transducer or a compressed air unit in order to generate the droplets from the liquid solution. In the case of the ultrasonic transducer, the liquid solution may be provided to a reservoir, the base of which is at least partially formed of the ultrasonic transducer. Upon activation, the ultrasonic transducer vibrates rapidly, causing the liquid solution in the reservoir to be nebulized, forming droplets in the air above the reservoir. Alternatively, compressed air may be directed through a reservoir, or stream, of the liquid solution. The high velocity of the compressed air causes the liquid solution to spray into the air within the droplet generator, thereby generating droplets of the liquid solution. The methods may be used separately or in conjunction with each other. The liquid solution may be provided to the droplet generator from a storage unit, which may form part of the device 10 or be provided separately.

Only droplets 22 of a certain size, less than $5\,\mu m$ in diameter, remain suspended in the air long enough to reach the drying unit 30 of the device. The size of the droplets can be controlled by altering the concentration of the liquid solution. A lower concentration will result in smaller and more uniform droplets.

The droplets 22 are provided to the drying unit 30, which in turn generates dry particles 32 from the droplets. The droplets may be provided to the drying unit by an air flow passing through the device. The air flow may be generated by an internal air flow generator, such as a fan, or through an external source, such as a user inhaling in close proximity to the device. In either case, the droplets 22 will be provided to the drying unit 30 on a flow of ambient air.

A temperature control unit 34 may be provided within the drying unit 30 in order to control the local temperature. The temperature control unit may comprise at least one of: a Peltier device; an electrical resistance heater; an infrared radiation source; and a microwave radiation source.

A Peltier device, acting as a heat pump, used in combination with a heat exchanger, such as a fin array, can be used for cooling the ambient air containing the droplets in order to reduce the relative humidity. The generated heat from heat exchanger can be further used to heat up the dried air to increase the saturation pressure whilst also keeping the absolute vapor pressure low. The droplets are suspended in the dried and heated air. The low humidity environment can accelerate the evaporation of $H_2O$ molecule from the droplets, thereby generating dry particles.

The Peltier device may be used in conjunction with an additional temperature control unit, such as an infrared radiation source. In this case, it is possible to generate dry particles of diameter less than $1\,\mu m$, meaning that the particles would be capable of reaching the lower airways of the user. With appropriate optimization, such as using different concentrations of liquid solution, power of infrared radiation source and treatment, it may be possible to acquire dry particles with a desired range of sizes.

Figure 2 shows two graphs of particle concentration, c, against time, t. The top graph 50 shows the distribution of particles sizes when infrared treatment is not applied to the droplets and the bottom graph 51 shows the distribution of particle sizes when infrared treatment is applied to the droplets.

The first line 52 of the top graph 50 shows the concentration of particles with a diameter of less than or equal to $10\mu m$ over time. The second 53, third 54 and fourth 55 lines show this same relationship for particles of diameter less than or equal to $5\mu m$, $2.5\mu m$ and $1\mu m$, respectively. Overlapping lines indicate that only particles of the lowest overlapping category are visible. For example, in the top graphs, the first second and third lines overlap after 3000s have passed, meaning that after this time, no particles of diameter greater than $2.5\mu m$ are present.

In the lower graph 51, the first line 56 represents the overlapping categories of particles with diameters equal to or less than $10\mu m$ and $5\mu m$, the second line 57 represents particles with a diameter equal to or less than $2.5\mu m$ and the third line 58 represents particles with a diameter equal to or less than $1\mu m$. As can be seen from the bottom graph, which depicts the scenario where infrared treatment is included, only particles with a diameter of less than or equal to $1\mu m$ are visible after a certain time; whereas, in the top graph, particles with a diameter of less than or equal to $2.5\mu m$ remain visible after the concentrations have stabilized. Thus, the inclusion of an infrared heater in the temperature control unit may enable the consistent production of particles with a diameter of less than or equal to $1\mu m$.

The dry particles are then provided to a particles size selector 40, which comprises a deflection channel 42 and a moveable nozzle 44.

Upon entering the deflection channel 42, the dry particles 32 are deflected based on their size. Larger particles, having a larger mass, will travel a short distance 45; whereas, a smaller particle with the travel a larger distance 46. The moveable nozzle 44 may be moved to the estimated travel distance of particles of a desired size 47. In this way, it is possible for the device to generate, collect and distribute dry particles of a predetermined size, from a liquid solution. In cases where the dry particles are required to reach the lower airway of the user, the movable nozzle can be moved to collect dry particles of around $1\mu m$ diameter; whereas, in cases that only require the upper airways to be treated, the movable nozzle may be moved to collect dry particles of around $2\mu m$, which will travel a shorter distance along the deflection channel due to their size and mass.

The device 10 can be provided in a system, which additionally comprises a sensor and a controller. The controller can operate in two working modes: manual and automatic. In manual mode, a user inputs the desired working parameters of the device, including liquid solution concentration, dry particle size, respiratory disease types, delivery direction and duration. In automatic mode, the sensor is used to monitor the local environment of the device, user presence and biomarkers of known respiratory diseases. The controller will automatically set the desired working parameters of the device based on the data generated by the sensor. For example, a sound sensor may detect the sound of a cough of the user. In response to this, the control unit may set the desired size of dry salt particles to be several microns in diameter, causing the movable nozzle to be moved to the corresponding position to collect these particles, and deliver them towards consumer to clear their upper airway.

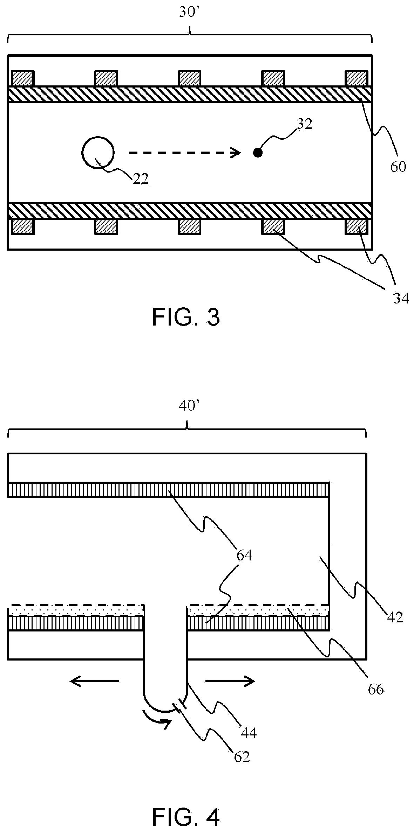

Figure 3 shows an embodiment 30' of the drying unit 30 shown in Figure 1. In this embodiment, the drying unit comprises a plurality of temperature control units provided at discrete locations along the drying channel. The temperature control unit may be a single continuous unit as shown in Figure 1 or may comprise any number of discrete heating units.

In addition, the drying unit 30' further comprises an absorption material 60, which is adapted to reduce the humidity within the drying unit. The absorption material, for example zeolite, can absorb the $H_2O$ molecules from the air surrounding the droplets and lower the local humidity of the drying channel. The low humidity environment can help to accelerate the evaporation of $H_2O$ molecules from the droplets themselves. The absorbed moisture in absorption materials can be evaporated by the ambient air flow.

Generally, the moisture content of the ambient air is lower than the air in the drying channel. The ambient air can also be heated, for example by electrical resistance heating wires, to encourage the evaporation of moisture from the absorption materials. The ambient air can be directed to flow through the absorption material in order to minimize the water content of the ambient air.

The humidity within the drying unit 30' can be controlled by both the heating unit 34, such as a Peltier device, and the absorption material 60. By controlling the local humidity of the drying unit, the generated droplets 22 can be quickly crystallized into solid particles 32. The time scale for the crystallization/solidification of the particles is in milliseconds. Particularly, for smaller saline droplets, having a diameter less than $1\mu m$, the time is within 1 millisecond for under 70% relative humidity. This short crystallization time means that the phase transition can occur along a short transport path, meaning that the drying unit, and so the device as a whole, may be reduced in size without compromising the generation of the dry particles. For example, the evaporation time is less than 30ms for saline droplets with a diameter $5\mu m$ at 70% relative humidity. This means that, for an air flow rate of lm/s, the drying unit can be made to be 30mm in length.

Figure 4 shows an embodiment 40' of the particle size selector 40 shown in Figure 1. In this embodiment, the moveable nozzle further comprises a rotatable outlet 62, which may be oriented so as to direct the collected dry particles in a desired direction as they leave the device. For example, the device may be deployed in close proximity to a user who, in a first instance is suffering from a cough, and in a second instance is suffering from blocked sinuses. In the first instance, the rotatable outlet 62 may be oriented towards the users mouth so as to ensure as many of the dry particles arrive in the upper airway as possible; whereas, in the second instance, the rotatable outlet would be oriented towards the user's nose in order to ensure that the dry particles travel through the nasal cavity and sinuses. This is particularly relevant if the device is incorporated into a face mask for example.

The rotatable outlet 62 may also have a particular relevance to a device located within an air conditioning system connected to several rooms of a building. Based on the location of the user, for example indicated by manual user input or automatic sensing, the rotatable outlet maybe used to direct the dry particles into the occupied room.

In the case that the dry particles 32 are charged by a charging unit within the drying unit 30 of the device 10, the particle size selector 40' further comprises an electromagnetic field generator 64. By establishing an electromagnetic field within the particle size selector the charged particles will alter their propagation path along the deflection channel 42. The electromagnetic field may be generated for example by applying a voltage to electrodes at opposing sides of the deflection channel. By precise selection of the intensity of electromagnetic field, the size of the dry particles can be distinguished with greater accuracy.

In this arrangement, three forces dominate the movement behaviour of the charged particles. The first force is gravity: *G=g\*m,* where *g* denotes the acceleration due gravity and *m* is the mass of the dry particle. Due to the action of gravity, large particles will travel shorter distances along the deflection channel compared to smaller particles.

The other forces are due to the electric field and the magnetic field created by the electromagnetic field generator. As a charged particle moves through an electromagnetic field, it experiences a Lorentz force, $\underline{F}= m^*(d\underline{v}/dt) = q^*(\underline{E}+\underline{V}\times\underline{B})$, where q is the net charge of the dry particle, $\underline{E}$ is the electric field strength, $\underline{V}$ is the velocity of the dry particle *and* $\underline{B}$ is the magnetic field strength. Both the gravitational force and electric field force will alter the velocity of the salt particles. The magnetic field force will cause the particles to be deflected. Based on the interaction of gravity and the electromagnetic field force upon the charged particles, the travel distance of certain sizes of particles can be readily calculated. Thus the position of the movable nozzle can be determined to reliably collect particles of a specific size.

The particle size selector may further comprise a recycling unit 66 that is adapted to receive dry particles that were not collected by the moveable nozzle 44. The uncollected particles may be moved away from the particle size selector, for example to the storage unit, by an air flow or a force due to the electric field. In this way, the build-up of uncollected particles in the particle size selector is prevented and the dry particles are not wasted, as they may be reused in the process.

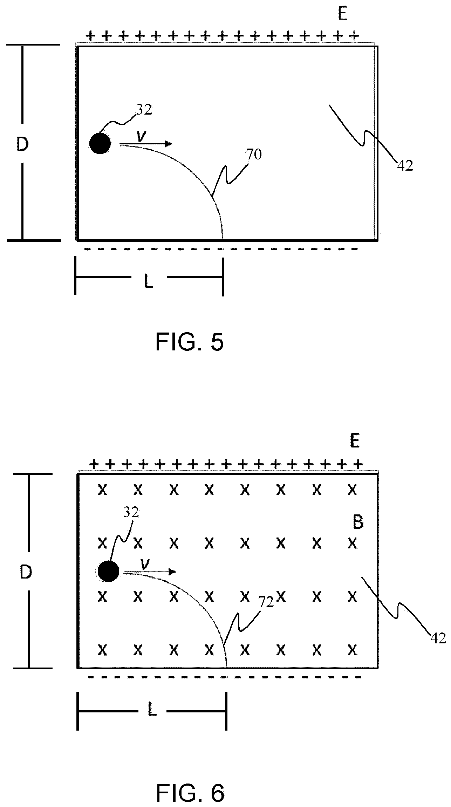

The travel distance of the particles may be determined in a number of ways. For example, Figure 5 shows a particle 32 travelling at an initial velocity V through a deflection channel 42 of diameter D. In this case, the particle is assumed to enter the channel at the centre. An electric field of strength E is generated across the deflection channel. The density, mass, diameter and charge of the dry particle are defined as *p, m, R and q,* respectively. The charge, *q* and initial velocity, *v can* be measured or pre-defined by the charging unit. For a spherical particle, the relationship between the mass, *m* and radius, *R* is given as:

$$m = \frac{1}{6}\pi\rho R^3$$

In this case, both the electric field force and gravity dominate the movement 70 of the particle through the equation:

$\vec{F} = q \cdot \vec{E} + m \cdot \vec{g},$ where $\vec{F}$ is the net force on the particle and $\vec{g}$ is the acceleration due to gravity. The travel distance of the particle, L, may then be calculated through the following equation:

$$L = v \cdot \sqrt{\frac{D}{mg + qE}}$$

This distance may be calculated by the device, or the controller, to collect particles of a desired size according to their travel distance along the deflection channel.

Figure 6 shows a further example of a particle 32 travelling along a deflection channel. The variables in this case are identical to those defined in Figure 5; however, a magnetic field, denoted by the crosses, of strength B is applied across the deflection channel. The motion of a particle under both an electric field and a magnetic field is complex. In order to simplify the scenario, we may consider the example where the electric field force balances with the force due to gravity, meaning that: $q \cdot \vec{E} + m \cdot \vec{g} = 0.$

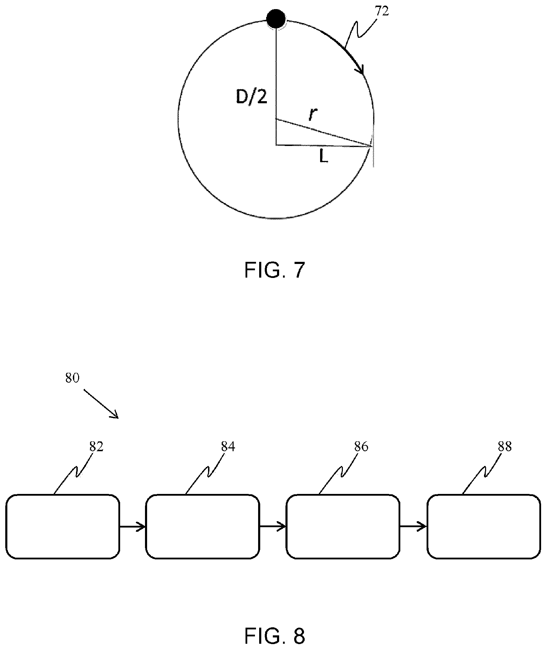

If the magnetic field, B, is perpendicular to the initial velocity, V, of the particle, the particle will perform a circular motion 72. The radius of the circular motion is given by: $r = \dfrac{mv}{qB}.$ The circular motion 72 of the particle is further depicted in Figure 7. Accordingly, the travel distance, L, of the particle is defined as:

$$L = \sqrt{r^2 - \left(\frac{D}{2} - r\right)^2} = \sqrt{(\frac{mv}{qB})^2 - (\frac{D}{2} - \frac{mv}{qB})^2}$$

Figure 8 shows a method 80 of the invention.
In step 82, droplets are generated from a liquid solution. The droplets may be generated by an ultrasonic transducer or a compressed air unit.
In step 84, dry particles are generated from the droplets. By controlling the temperature and humidity of the droplet's local environment, evaporation is encouraged, thereby generating dry particles from the droplets.
In step 86, the dry particles are deflected along a deflection channel based on their size. Large particles will travel a shorter distance compared to smaller particles.
In step 88, a nozzle is moved to a position along the deflection channel so as to collect the dry particles of a predetermined size.
Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

**Claims**

1. A device for generating dry particles (32) of a predetermined size from a liquid solution, wherein the device comprises:

   a droplet generator (20), wherein the droplet generator is adapted to generate droplets (22) from the liquid solution;
   a drying unit (30), wherein the drying unit is adapted to generate dry particles from the droplets; and
   a particle size selector (40), wherein the particle size selector comprises:

   a deflection channel (42), wherein the dry particles are deflected within the deflection channel in dependence on their size; and
   a movable nozzle (44) along the deflection channel, wherein the movable nozzle is adapted to collect dry particles of a predetermined size.

2. A device as claimed in claim 1, wherein the liquid solution comprises a saline solution.

3. A device as claimed in any preceding claim, wherein the droplet generator comprises at least one of an ultrasonic transducer and a compressed air unit.

4. A device as claimed in any preceding claim, wherein the drying unit comprises a temperature control unit (34).

5. A device as claimed in claim 4, wherein the temperature control unit (34) comprises at least one of: a Peltier device; an electrical resistance heater; an infrared radiation source; and a microwave radiation source.

6. A device as claimed in any preceding claim, wherein the drying unit comprises an absorption material (60) adapted to reduce the humidity within the drying unit.

7. A device as claimed in any preceding claim, wherein the movable nozzle (44) collects dry particles with a diameter of less than $2\mu$m and preferably with a diameter of less than $1\mu$m.

8. A device as claimed in any preceding claim, wherein the moveable nozzle comprises a rotatable outlet (62) adapted to control the direction of particles leaving the deflection channel.

9. A device as claimed in any preceding claim, wherein the drying unit further comprises a charging unit adapted to charge the dry particles.

10. A device as claimed in claim 9, wherein the deflection channel comprises an electromagnetic field generator (64).

11. A device as claimed in any preceding claim, wherein the device further comprises an air flow generator.

12. A device as claimed in any preceding claim, wherein the device further comprises a storage unit adapted to store the liquid solution.

13. A device as claimed in claim 12, wherein the device further comprises a recycling unit (66), wherein the recycling unit is adapted to move uncollected particles from the particle size selector to the storage unit.

14. A system for generating dry particles of a predetermined size from a liquid solution, wherein the system comprises:

   a sensor, wherein the sensor is adapted to generate environmental data;
   a device as claimed in any preceding claim; and
   a control unit in communication with the device and the sensor, wherein the control unit is adapted to control the device based on the environmental data.

15. A method (80) for generating dry particles of a predetermined size from a liquid solution, the method comprising:

   generating (82) droplets from the liquid solution;
   generating (84) dry particles from the droplets;
   deflecting (86) the dry particles along a deflection channel based on their size; and
   moving a nozzle (88) to a position along the deflection channel so as to collect dry particles of a predetermined size.

FIG. 1

FIG. 2

FIG. 3

FIG. 4

E

+ + + + + + + + + + + + + + + +

32

**v** →

70

42

D

L

FIG. 5

E

+ + + + + + + + + + + + + + + +

X X X X X X X X

32

X X X X X X X X        B

D

X X **v** → X X X X X X

X X X X X X X X
72

X X X X X X X X

42

L

FIG. 6

FIG. 7

FIG. 8

Europäisches
Patentamt

European
Patent Office

Office européen
des brevets

## EUROPEAN SEARCH REPORT

Application Number

EP 17 16 9880

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 722 479 A (OEFTERING RICHARD [US]) 3 March 1998 (1998-03-03) * column 9, last paragraph; claim 1; figures 2,17 * ----- | 1-15 | INV. B01J2/04 B01J2/18 B07B13/10 |
| A | US 5 868 305 A (WATTS JR HAL G [US] ET AL) 9 February 1999 (1999-02-09) * column 5, line 4, paragraph 3; claim 1; figure 1 * ----- | 1-15 | |
| A | US 2002/031677 A1 (ORME-MARMERELIS MELISSA [US] ET AL) 14 March 2002 (2002-03-14) * claim 1; figures 3,6a * ----- | 1-15 | |
| A | US 3 899 416 A (SCHWARTZ GUNTHER ET AL) 12 August 1975 (1975-08-12) * claim 1; figure 1 * ----- | 1-15 | |

TECHNICAL FIELDS
SEARCHED (IPC)

B01J
B07B

The present search report has been drawn up for all claims

| Place of search | Date of completion of the search | Examiner |
|---|---|---|
| The Hague | 25 October 2017 | Gilliquet, J |

EPO FORM 1503 03.82 (P04C01)

**EP 3 401 005 A1**

## ANNEX TO THE EUROPEAN SEARCH REPORT
## ON EUROPEAN PATENT APPLICATION NO.

EP 17 16 9880

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2017

| Patent document cited in search report | | Publication date | Patent family member(s) | | Publication date |
|---|---|---|---|---|---|
| US 5722479 | A | 03-03-1998 | US 5520715 A<br>US 5722479 A | | 28-05-1996<br>03-03-1998 |
| US 5868305 | A | 09-02-1999 | NONE | | |
| US 2002031677 | A1 | 14-03-2002 | US 2002031677 A1<br>US 2003136222 A1 | | 14-03-2002<br>24-07-2003 |
| US 3899416 | A | 12-08-1975 | BE 806654 A1<br>DE 2253353 A1<br>FR 2280442 A1<br>GB 1432491 A<br>IT 994471 B<br>NL 7314010 A<br>US 3899416 A<br>ZA 7308084 B | | 29-04-1974<br>11-07-1974<br>27-02-1976<br>14-04-1976<br>20-10-1975<br>02-05-1974<br>12-08-1975<br>30-10-1974 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A.V. CHERVINSKAYA.** *Journal of Aerosol Medicine,* 1995, vol. 8, 3